# EUROPÄISCHE PATENTSCHRIFT

(11) **EP 3 852 952 B1**
(45) Veröffentlichungstag und Bekanntmachung des Hinweises auf die Patenterteilung: **02.11.2022**
(21) Anmeldenummer: 19773053.4
(22) Anmeldetag: 19.09.2019
(51) Int. Cl.: H02K 15/04, B22D 11/06, B22D 31/00, B29C 43/22, H01F 41/04, B29C 43/46, B29C 43/18, H01F 41/077, B29K 705/00, B29L 31/00

(54) **WÄLZGIESSVERFAHREN UND WÄLZGIESSVORRICHTUNG ZUM HERSTELLEN EINER SPIRALSTRUKTUR**
ROLLER MOLDING METHOD AND APPARATUS FOR PRODUCING A SPIRAL STRUCTURE
PROCÉDÉ ET APPAREIL DE COULÉE-LAMINAGE DESTINÉ À LA FABRICATION D'UNE STRUCTURE EN SPIRALE

(30) Priorität: 19.09.2018 DE 102018215974
(43) Veröffentlichungstag der Anmeldung: 28.07.2021
(73) Patentinhaber: Fraunhofer-Gesellschaft zur Förderung der angewandten Forschung e.V., 80686 München (DE)
(72) Erfinder: WÖSTMANN, Franz-Josef, 28359 Bremen (DE); HEUSER, Michael, 28359 Bremen (DE); BUSSE, Matthias, 28359 Bremen (DE)
(74) Vertreter: Pfenning, Meinig & Partner mbB
(86) Internationale Anmeldenummer: PCT/EP2019/075157
(87) Internationale Veröffentlichungsnummer: WO 2020/058395

(56) Entgegenhaltungen:
- EP-A2- 2 387 135
- EP-A2- 2 819 276
- JP-A- S58 126 112
- US-A- 1 690 887
- US-A- 4 499 040

## Beschreibung

Die vorliegende Schutzrechtsanmeldung betrifft ein Wälzgießverfahren zum Herstellen einer Spiralstruktur.

Bei elektrischen Maschinen kommen gewickelte Spulen zum Einsatz. Die Spulen füllen den zur Verfügung stehenden Bauraum nicht ideal aus. Daraus resultiert eine geringere Leistungs- bzw. Drehmomentdichte der elektrischen Maschinen bezogen auf das Gewicht oder den Bauraum. Durch den Einsatz gegossener, umgeformter oder gedruckter Spulen mit veränderlichem Querschnitt wird ein besserer Füllgrad erreicht und die o.g. Defizite verbessert.

Die Formgebung dieser Spulen ist aufgrund der komplexen dreidimensionalen Geometrie schwierig und erfolgt bislang vornehmlich in Dauerformen oder verlorenen Formen mit oder ohne Kernen. Dies sind in der Regel diskontinuierliche Verfahren mit aufwändiger Werkzeugtechnik, in denen die Spulen hergestellt werden.

Eine typische Geometrie der Spule ist in Bild 1 dargestellt. Diese Spulen sind in EP2387135A2 und in EP2819276 ausführlich beschrieben.

JP S58 126112 A betrifft die Herstellung einer Dämpfungsplatte durch ein Verfahren, bei dem das Plattenmaterial zwischen formgebenden Walzen hindurchgeführt wird, die zueinander umgekehrt sind, wobei der Kern des Plattenmaterials aus Kunststoff ist, um ein spezielles gewelltes Design zu erhalten. Das geschmolzene oder auf eine höhere Temperatur als den Erweichungspunkt erwärmte Plattenmaterial wird in den Freiraum zwischen einem Paar von gewellten Walzen zugeführt, die gegenläufig zueinander sind, um die Harzplatte zu formen und die Platte durch die Umdrehung der Walzen zur gleichen Zeit zuzuführen. Wenn geschmolzenes Harzmaterial von der Düse nach und nach in den Zwischenraum zwischen den einander zugewandten Walzen eingefüllt wird, die sich nach innen drehen, bildet das Material eine geformte Platte mit einer wellenförmigen Form, die den Scheiteln und Mulden der Walzen entspricht.

US 4 499 04 A betrifft ein Verfahren zur Herstellung von gestanzten Kunststoffplatten, bei dem eine geschmolzene, extrudierte thermoplastische Platte in ein flüssiges Kühlmittel getaucht wird, unmittelbar bevor sie durch ein Paar von Stanzwalzen mit zahn- oder schaufelartigen Vorsprüngen läuft. Auf diese Weise wird auf der Oberseite der geschmolzenen Kunststoffplatte vor dem Prägen eine Hautschicht gebildet. Nach dem Prägen wird die Platte durch die einander gegenüberliegenden Spitzen der oben genannten zahn- oder schaufelartigen Vorsprünge gespannt und dann aus dem flüssigen Kühlmittel entfernt, nachdem das Innere der Platte ausgehärtet ist, um eine geprägte Platte mit einer im Wesentlichen einheitlichen Dicke zu bilden.

Die der Erfindung zugrunde liegende Aufgabe liegt darin, in einem industriell anwendbaren Prozess, d. h. schnell, kostengünstig und in hoher Stückzahl, Spiralstrukturen herzustellen, mit denen Spiralen zum Einsatz in elektrischen Maschinen herstellbar sind. Diese Aufgabe wird durch den Gegenstand der Patentansprüche gelöst.

Die Patentansprüche beziehen sich u. a. auf ein Wälzgießverfahren zum Herstellen einer Spiralstruktur, nämlich einer Spiralstruktur zur Verwendung in elektrischen Maschinen, wobei Schmelze zwischen eine erste sowie eine dazu gegengleich laufende zweite Walze zugeführt wird, wobei die erste Walze erste Zähne sowie die zweite Walze zweite Zähne hat und die ersten und/ oder zweiten Zähne Zahnflanken mit Kavitäten haben zur Aufnahme der zugeführten Schmelze, wobei die Zähne derart gestaltet und ausgerichtet sind, dass beim Drehen der Walzen die Kavität mindestens eines Zahns zumindest zeitweise durch eine Oberfläche eines Zahns der anderen Walze begrenzt wird, so dass die zugeführte Schmelze zwischen den Zähnen unter Abkühlung zu einem Abschnitt, beispielsweise einem Steigungsabschnitt der Spiralstruktur geformt wird.

Der Begriff "Wälzgießen" ist eine Begriffsneubildung und bezeichnet die Formung von Strukturen durch Abwälzen zahnradähnlicher, mit Kavitäten versehener Elemente, wobei Schmelze unter Abkühlung in Kavitäten geformt wird. Dieses Verfahren ist sowohl für Einzel- als auch für Endlosstrukturen einsetzbar.

Unter "Abschnitt der Spiralstruktur" wird ein beliebiger Abschnitt der durch abgekühlte und geformte Schmelze entstehenden Spiralstruktur verstanden.

Unter dem Begriff "Steigungsabschnitt" wird zumindest ein Abschnitt der Spiralstruktur verstanden, der eine Verdrehung und/oder einen Höhenversatz in Richtung der zentralen Achse der entstehenden Spiralstruktur bzw. späteren Spirale aufweist. Dies kann beispielsweise bei einer Rechteckspiralstruktur

(fertige Spirale siehe Abb. 1) eine Anordnung mit verdrehten Windungsschenkeln (siehe Abb. 3 oder 4a bis 4m) sein. Die Herstellung einer späteren Spirale erfolgt dann durch nochmalige Verdrehung von Windungsschenkeln zueinander und anschließendes Komprimieren, beispielsweise gemäß Abb. 5.

Die Erfindung wird anhand mehrerer Abbildungen erläutert. Es zeigen:

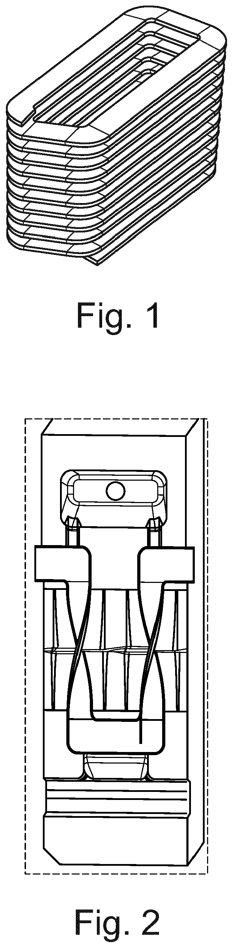

- Abb. 1: eine Spulengeometrie,
- Abb. 2: eine Werkzeuggeometrie für einen Gießprozess,

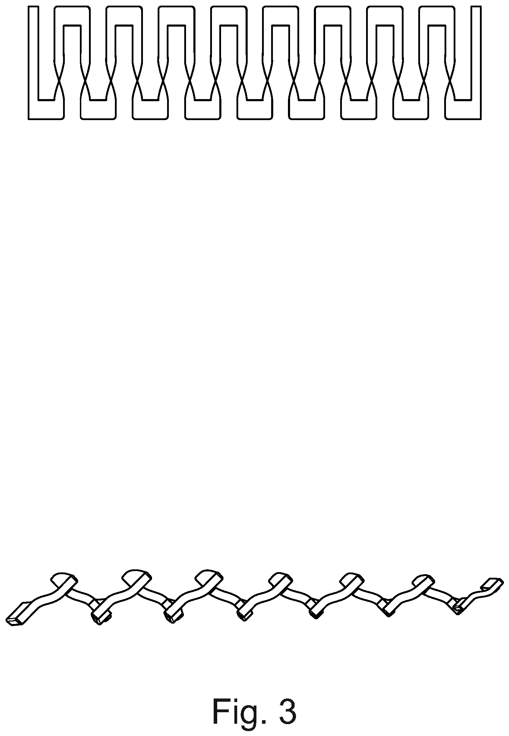

- Abb. 3: eine Draufsicht sowie Seitansicht einer abgewickelten Spiralstruktur,

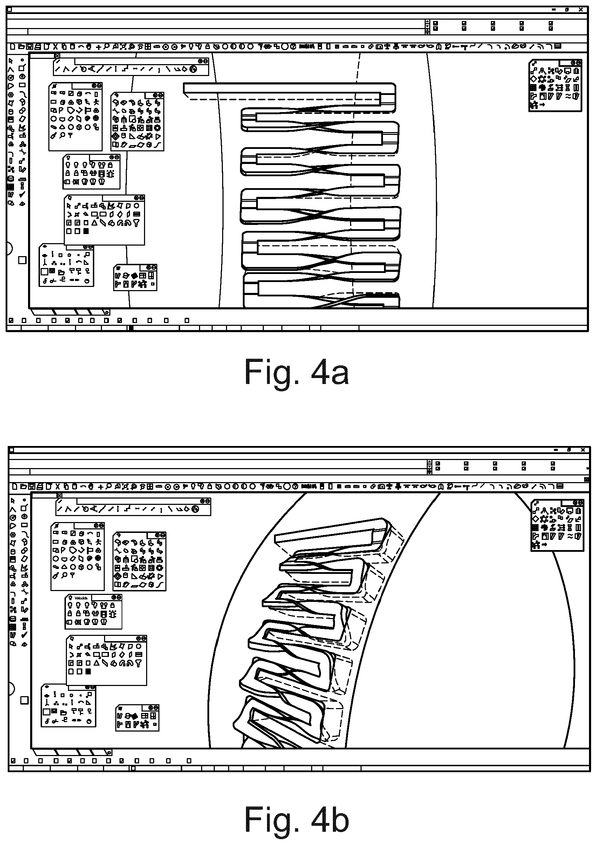

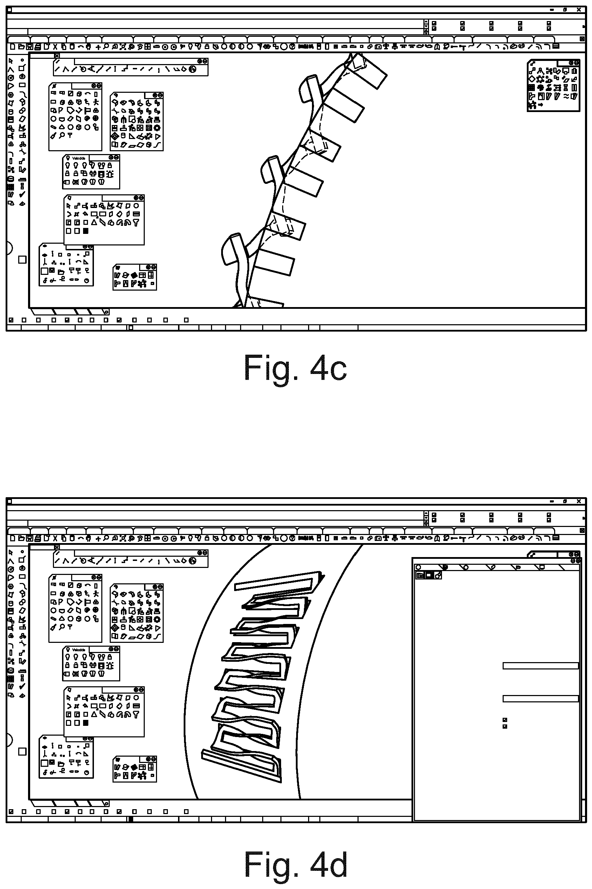

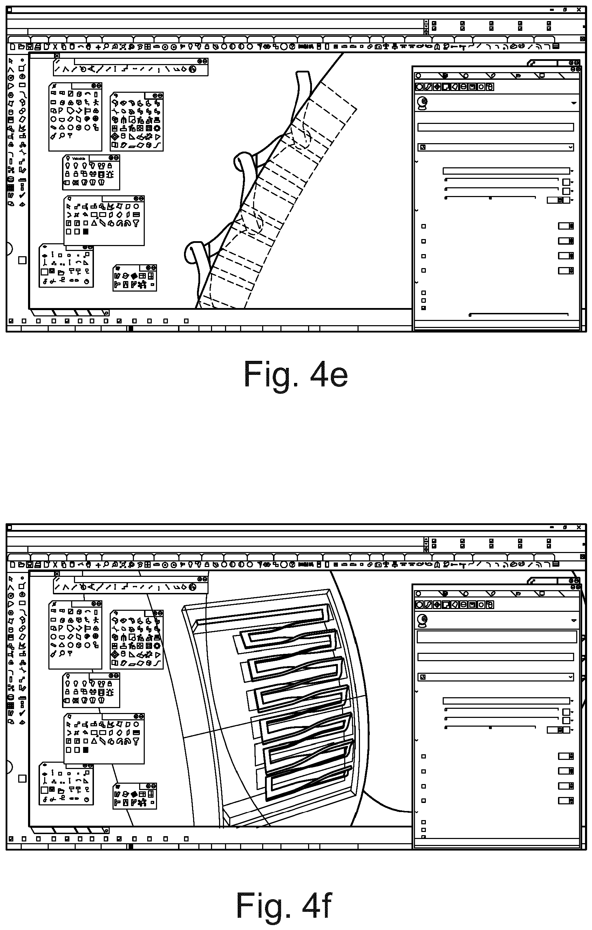

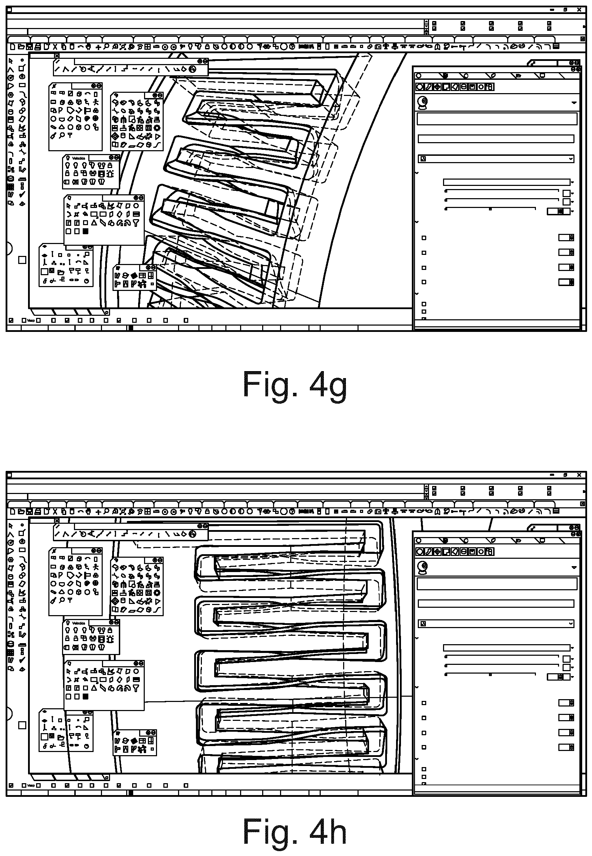

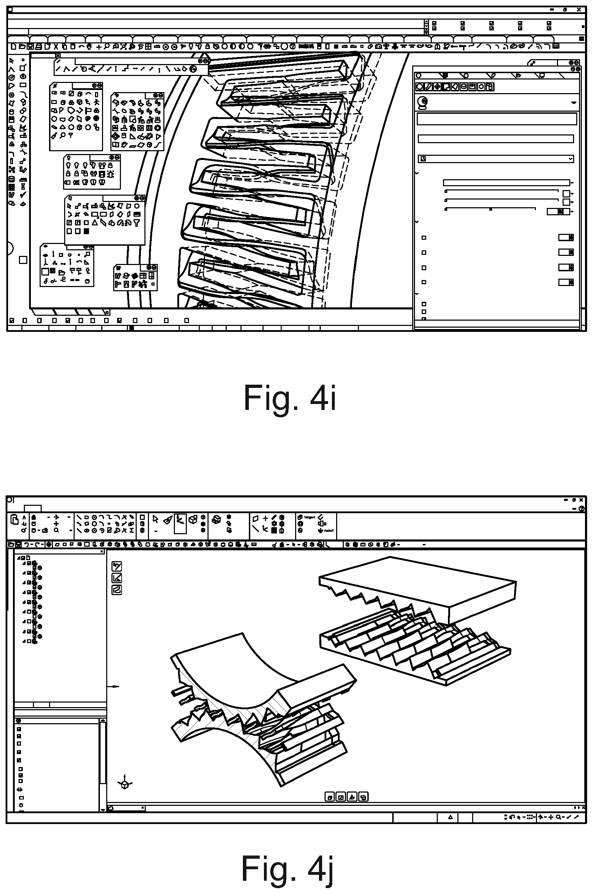

- Abb. 4a bis 4m: Walzen mit darauf liegenden Spiralstrukturen sowie Details einer Wälzgießeinrichtung, und

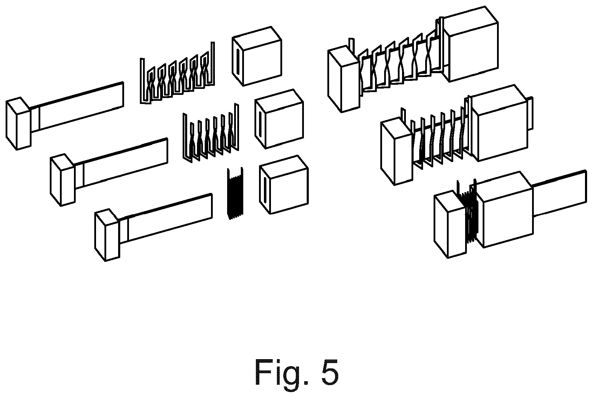

- Abb. 5: Kompression einer Spiralstruktur in Richtung der zentralen Spiralachse.

Mit dieser Erfindung findet die Formgebung der Spule bzw. einem Spulen Halbzeug oder Vorprodukt direkt aus der Schmelze, mit einem thixotropen Werkstoff oder mit einem Vormaterial in Form eines Drahtes zwischen zwei kontinuierlich drehenden Walzen statt.

Um einen kontinuierlichen Herstellungsprozess mit kurzen Zykluszeiten zu realisieren, wird die Werkzeuggeometrie, wie sie in parallelen Patentanmeldungen der Anmelderin beschrieben ist, auf zwei Walzen abgewickelt. Die Walzen laufen gegeneinander, so dass sie in ihrem Kontaktpunkt bzw. ihrer Kontaktlinie jeweils einen Formhohlraum bilden. Durch die kontinuierliche Drehung beider Walzen wird so eine vollständig abgewickelte Spule als Formhohlraum bei fortlaufender Drehung in der Kontaktlinie erzeugt.

Die Kontur der Walzen ist dabei so aufeinander angepasst, dass von oben Schmelze in den sich bildenden Formhohlraum eintreten kann und durch die fortlaufende Drehbewegung mittransportiert wird. Die Temperatur von Walzen und Schmelze, sowie die Kühlung der Walzen ist dabei so abgestimmt, dass die Schmelze bei der fortlaufenden Umdrehung spätestens erstarrt ist, wenn die Kavität sich wieder nach unten öffnet.

In dem fortlaufenden Prozess wird damit bei jeder Umdrehung des Walzenpaares eine oder mehrere abgewickelte Spulen erzeugt.

Je nach Spulengeometrie werden eine oder mehrere Spulen am Umfang der Walzen positioniert. Dabei ist es vorteilhaft den Walzendurchmesser möglichst groß zu halten, um die Krümmung zu reduzieren. Wird dabei der Umfang der Walze größer als die Länge der abgewickelten Spule, so werden zwei oder mehrere Spulen um die Walze herum positioniert. Das erfolgt in der Art, dass nach einer vollständigen Umdrehung beider Walzen wieder die erste Kavität-Geometrie zum Eingriff kommt.

Weiterhin können zur Steigerung der Produktivität mehrere Walzenpaare direkt nebeneinander angeordnet werden.

Zum Erzeugen dieser Geometrie wird im Wälzgießverfahren oder Wälzformverfahren (zum Wälzformverfahren siehe auch die am selben Tage eingereichte Patentanmeldung derselben Anmelderin mit dem Titel "Wälzformverfahren zum Herstellen einer Spiralstruktur ...", deren Inhalt hiermit voll umfänglich in die vorliegende Patentanmeldung übernommen wird) zunächst eine Geometrie bzw. eine Spiralstruktur hergestellt, die in z-Höhenrichtung auseinandergezogen und in jeder Windung um 90 Grad gedreht ist. Hinsichtlich des Winkels ist ebenso eine wechselweise größerer und kleinerer Winkel möglich. Damit entsteht die abgewickelte Geometrie.
a) Die beiden Walzen mit der eingebrachten Kontur, ähnlich einem Zahnrad drehen in entgegengesetzten Richtungen. Dabei schließen und öffnen sie durch das Abrollen der Walzen aufeinander die Konturen des Formhohlraums zwischen den Walzen in einem kontinuierlichen Prozess und das Spulenmaterial wird zwischen die Walzen gegeben, in dem Formhohlraum in die gewünschte Geometrie gebracht und kommt aus der gegenüberliegenden Seite wieder zwischen den Walzen analog zu Abbildung 3 heraus. Die Kavitäten können Windung zu Windung oder auch "von Zahn zu Zahn" unterschiedlich sein, um veränderliche Querschnitte der entstehenden Windungen zu ermöglichen.
b) Die Orientierung der Walzen und die resultierende Anordnung der Achsen im Raum sind grundsätzlich frei.
c) Die in Abb. 3 in zwei Ansichten (oben Draufsicht, unten Seitansicht) gezeigte Spiralstruktur kann durch Verwindung einzelner Schenkel und/oder durch eine Kompression in Richtung der zentralen späteren Spiralachse zu einer Rechteckspirale geformt werden.

### Beispiel: Zuführung des Materials von oben:

Unter Ausnutzung der Schwerkraft wird von oben flüssige Schmelze, thixotropes Material oder festes Material zugeführt.

Bei flüssigem Material ist entweder die Mengenzufuhr so zu dosieren, die zugeführte Schmelzemenge mit der durch den Formhohlraum zwischen den Walzen abgeführten übereinstimmt oder etwas grösser ist. Bei einer geringfügig größeren Menge läuft überschüssige Material an den Seiten der Walzen heraus/herunter und wird aufgefangen. Vorteilhaft ist, wenn die Zuführung der Schmelze unter Schutzgas erfolgt.

Alternativ zur genau dosierten Schmelzemenge kann oberhalb der Walzen ein Schmelzereservoir angeordnet sein, das nach unten durch die Walzen und an den Seiten durch eine temperaturbeständige Wandung begrenzt ist.

Die Drehgeschwindigkeit der Walzen ist dabei so abgestimmt, das auf der unteren Seite die abgewickelte Spulengeometrie im festen Zustand heraustritt. Zur Unterstützung der Kühlung bzw. Wärmeabfuhr können die Walzen temperiert werden. Weiterhin kann bei dieser Anordnung unterhalb des Walzenpaares direkt ein Bad mit Wasser zum Abschrecken, einer Oxidierenden Flüssigkeit zum Abschrecken und passivieren oder isolieren der Oberfläche oder ein Schmelzebad mit einem niedrigschmelzenden Metall oder Kunststoff für eine direkte Beschichtung.

Bei Zufuhr von thixotropem oder festem Material wird das Material von oben mithilfe einer Zuführeinrichtung als Halbzeug zugeführt, z. B. analog zu der Drahtzuführung in einem Schutzgasschweißgerät. Zur Vorwärmung des Materials wird zwischen dem Ende der Zuführeinrichtung und den Walzen eine Spannung angelegt. Stromstärke und Verweildauer zwischen Zuführeinrichtung und Walze bestimmen dabei die durch den elektrischen Wiederstand resultierende Temperatur des Vormaterials.

Ebenso kann das Material von der Seite oder von unten zugeführt werden. Speziell bei einer Zuführung von unten nach oben kann die Schmelze mittels Niederdruck, aufgebracht durch Gas, analog zum konventionellen Niederdruckguss oder durch miteinander korrespondierende Schmelzekammern realisiert werden.

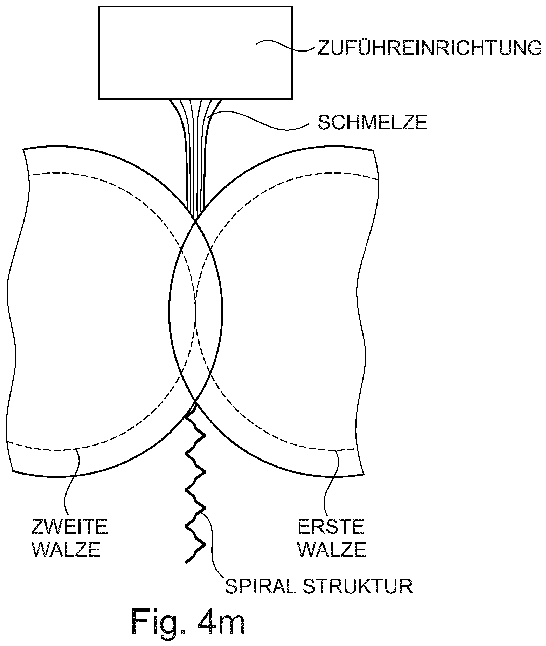

Abb. 4a bis 4l zeigen beispielhafte Ausführungsformen der zu gießenden Spiralstrukturen. Im Interesse der besseren Verständlichkeit bzw. der einfacheren Darstellung wird hierbei in Abbildungen 4a bis 4i jeweils nur eine Walze mit einer darauf zu formenden Spiralstruktur gezeigt. Die entgegenstehende Walze wird nicht gezeigt. Gleichwohl ist die dargestellte Spiralstruktur (die in der Draufsicht mäanderförmig erscheint) in ihrem vollständig gegossenen Endzustand gezeigt, wie sie durch Formung der beiden gegeneinander laufenden Walzen in der zwischen den Zahnflanken und der entsprechenden Kavität der sich gegeneinander drehenden Walzen geformt wird. Hervorzuheben ist auch, dass die gesamte fertige Spiralstruktur gezeigt ist, d.h. aus Gründen der besseren Darstellbarkeit wird der flüssige Zustand der Schmelze hier nicht gezeigt (siehe hierzu Abb. 4m). In Abbildung 4a bis 4i ist zu sehen, wie eine Struktur gemäß Abb. 3, allerdings auf dem Umfang einer Walze gewickelt, entsteht.

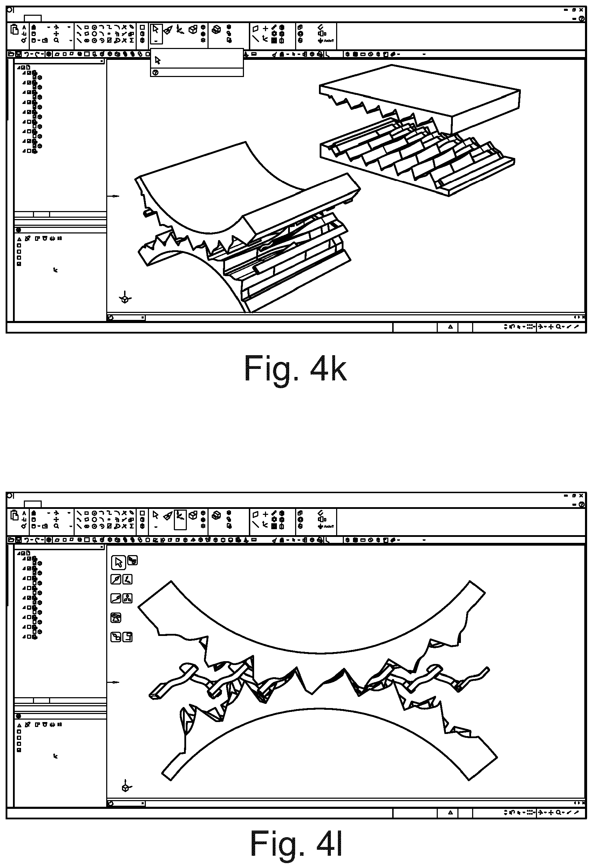

Ergänzend hierzu zeigen Abb. 4j, 4k sowie 4l Anordnungen, bei denen die beiden sich gegeneinander abrollenden Walzen gezeigt sind. Gezeigt ist dort ein Walzgießverfahren zum Herstellen der Spiralstruktur, insbesondere zur Verwendung in elektrischen Maschinen, wobei Schmelze (hier dargestellt) zwischen eine erste sowie eine dazu gegengleich laufende zweite Walze geführt wird (in Abb. 4k bzw. 4l ist jeweils eine obere und eine untere Walze gezeigt), wobei die erste Walze erste Zähne (beispielsweise die obere Walze in Abb. 4l) sowie die zweite Walze zweite Zähne hat (untere Walze in Abb. 4l) und die ersten und/oder zweiten Zähne Zahnflanken mit Kavitäten haben zur Aufnahme von zugeführter Schmelze, wobei die Zähne derart gestaltet und ausgerichtet sind, dass beim Drehen der Walzen die Kavität mindestens eines Zahns zumindest zweitweise durch eine Oberfläche eines Zahn der anderen Walze begrenzt wird, sodass die zugeführte Schmelze zwischen den Zähnen unter Abkühlung zu einem Abschnitt der Spiralstruktur geformt wird. Hierbei ergibt sich die in Abb. 4a bis Abb. 4k gezeigte Spiralstruktur.

Abb. 4m zeigt schematisch eine oberhalb einer Walzenanordnung (gebildet von erster Walze sowie zweiter Walze, wobei die erste Walze erste Zähne sowie die zweite Walze zweite Zähne hat und die ersten und/oder zweiten Zähne Zahnflanken mit Kavitäten haben zur Aufnahme von zugeführter Schmelze. Die zugeführte Schmelze wird über die oberhalb der Walzen gezeigte Zuführeinrichtung zugeleitet, durch das Zuleiten der Schmelze in Kavitäten der Zahnflanken der sich gegenüberstehenden Walzen wird eine Spiralstruktur (siehe auch Abb. 3) geformt, die dann zu einer Spirale, beispielsweise einer Rechteckspirale weiter verarbeitbar ist durch Komprimieren in Richtung der späteren zentralen Spiralachse.
c) Als Materialien kommen grundsätzlich alle elektrisch leitfähigen Materialien in Betracht, insbesondere Aluminium, Kupfer und ihre Legierungen, alle metallischen Werkstoffe, aber auch hybride Materialien wie elektrisch leitfähige Kunststoff-Komposite.
d) Durch Aufsprühen eines geeigneten Trennmittels auf die rotierenden Walzen im Bereich der formgebenden Kavitäten kann einerseits die Entformung der gestreckten Spule beim Austritt aus dem Abwälzbereich vereinfacht werden. Andererseits kann das Trennmittel z.B. eine oxidierende Wirkung auf die Oberfläche der Spulenwindungen haben, was die elektrische Isolation der Windungen untereinander verstärkt (Effekt des Eloxierens) und gleichzeitig eine unterstützende Wirkung für die spätere Beschichtung zur Isolation der Spule darstellen kann.
e) Zur elektrischen Isolation der Spule kann eine Beschichtung aufgebracht werden. Dies kann durch ein nachgeschaltetes Walzenpaar mit identischer Kontur in die die gestreckte Spule erneut eingezogen wird. In die Kavitäten dieses zweiten Walzenpaares wird zuvor kontinuierlich das Isolationsmaterial eingebracht, dass beim Durchlauf der gestreckten Spule ähnlich einem Walzplattierverfahren auf die Windungen ggfs. bei erhöhter Temperatur aufgebracht wird. Dies kann alternativ zu den bekannten Beschichtungsverfahren der Spule erfolgen.
f) Die Walzen können je nach zu verarbeitendem Material aus Werkzeugstahl, bei zu verarbeitenden Kunststoffen oder anderen weichen und niedrigtemperierten Materialien aus Aluminium, Keramik oder Kombinationen daraus bestehen. Weiterhin kann die formgebende Kontur als auswechselbarer Einsatz gestaltet werden, so dass bei Verschleiß ein einfacher Austausch erfolgen kann, oder die gleichen Grundwalzen für verschiedene Geometrien und Materialien eingesetzt werden können.
g) Nach der Herstellung der abgewickelten Geometrie wird diese Prozessschritte wie Entgraten, Polieren, Reinigen, Schleifen, Beschichtungsverfahren zugeführt. Hierbei erweist sich die Geometrie durch die bessere Zugänglichkeit aufgrund der vorverformten Spule als positiv. Für ein notwendiges Handling des Halbzeuges können im Walzprozess Positionier-, Fixier-, Handlinghilfen etc. mit in der Walzenkontur vorgesehen werden, die je nach Bedarf entfernt oder zur Weiterverarbeitung genutzt werden können. Der zweite entscheidende Vorteil dieser Geometrievariante ist der einfache Umformprozess nach dem Gießen durch Einschieben eines Führungsstabes in die Seele der Windung und direktem Umformen der Windungen aufeinander. Dies wird durch das Einfädeln auf einen Dorn mit Schulter erreicht, so wie in Abb. 5 dargestellt. Mithilfe dieser Konstruktion wird die Spule in den Einbauzustand zurück verformt bzw. gebracht. Hierbei können Umformprozess und Kalibrierung kombiniert werden. Zur Erläuterung: Der Führungsstab ist am Anfang dünn (zur Vereinfachung des Einfädelns, wird zur druckaufbringenden Auflagefläche hin dicker und entspricht der Endkontur des Innenraums der Windung). Vorteilhafterweise hat die Endkontur des Innenraums mindestens die gleiche Höhe wie die zu erzielende Gesamtspule. (siehe Abb. 5)
h) Die konturgebende Geometrie der Walzen kann als Einsatz gestaltet sein, der aufgrund von Verschleiß, Beschädigung, Geometriewechsel, etc. einfach ausgetauscht werden kann. Dabei kann der Einsatz je nach zu verarbeitendem Material aus Stahl, Aluminium, anderen metallischen Werkstoffen, Keramik oder Kunststoff gefertigt sein. Für die Herstellung der Einsätze können konventionelle Verfahren zum Einsatz kommen. Ebenso kann der Einsatz als Rohkörper in gestreckter/ebener Lage gefertigt werden und anschließend auf den Umfang des Wälzkörpers als Einsatzträger umgeformt werden. Bei den keramischen Einsätzen oder Kunststoffeinsätzen kann hierbei eine Masterkontur in ebener Geometrie hergestellt, auf das notwendige Bogenmaß umgeformt und anschließend in einem Rapid-Prototyping-Verfahren, zum Beispiel im Vakuumguss für die Herstellung der Einsätze genutzt werden. Dabei wird vorteilhafterweise durch die Umformung direkt die notwendige Verformung der Kontur für ein reibungsloses Ineinandergreifen erzielt. Ebenso können bei diesem Vorgehen Kunststoff- oder Wachsformlinge hergestellt werden, die zur Erzielung von metallischen Einsätzen im Feinguss abgegossen werden.

Der Vorteil der Erfindung besteht in der Reduzierung des Fertigungsaufwandes und stellt eine kostengünstige und serientaugliche Alternative zu bisher bekannten Formgebungsverfahren für elektrische Spulen dar.

Bei der Formung werden jeweils die parallel verlaufenden Schenkel der späteren Spirale geformt, das heißt die beiden Längsseiten oder die beiden Stirnseiten (Winkelkopfseiten). Sollten diese sich gegenüberliegenden Seiten bzw. Schenkel nicht genau parallel sein, wird dies durch entsprechende Winkelanpassungen ausgeglichen, sodass sich eine Winkelsumme von 180 Grad ergibt. Durch die Kombination von umgeformten Wickelkopf und <= 90° Verdrehung, bzw. wechselseitig einer größeren und einer kleineren Verdrehung der Windung werden folgende Vorteile erhalten:'
- Kontinuierlicher Herstellungsprozess mit extrem hoher Ausbringung.
- Durch die kombinierte und variable Anpassung der Modifikation des Wickelkopfes und bei gleichzeitiger Verdrehung der Spule <=90° kann das Werkzeugkonzept für jegliche Art von Steckspulen eingesetzt werden.
- Keine Ausformschrägen an relevanten Stellen an den Windungen erforderlich (parallelflankige und nicht parallelflankige Windungen realisierbar), dadurch keine fertigungsbedingte Verringerung des Nutfüllfaktors
- Vorverformte Spule kann durch einfaches Zusammenschieben mit Hilfe eine Dorns in den Einbauzustand umgeformt werden (somit ist kein komplexer Prozess notwendig)
- Dorngeometrie kann dabei so gestaltet sein, dass mit dem Umformen direkt eine Kalibrierung in die Endgeometrie umgesetzt wird. (Ein dünner Einfädelbereich wird über die Dornlänge hin zur kraftaufbringenden Schulter dicker bis hin zur Endgeometrie des Spuleninnenraums. Endkontur des Spuleninnenraums sollte dabei idealerweise mindestens die gleiche Länge wie die zu erzielende Spulengeometrie haben.)
- Prozessschritte sind automatisierbar (wichtig für Großserie)
- Durch Verwendung von konturgebenden Einsätzen sind die Wechselzeiten gering, die Werkzeugkosten und Investitionskosten gering.
- Einfach skalierbar durch den Einsatz mehrerer Walzenpaare nebeneinander.
- Verfahren/Fertigungsvariante lässt sich auf andere Geometrien übertragen, z. B. profilierte Drähte.

Durch die Erfindung wird es möglich, Spulen mit Werkstoffen wie Al und Cu oder Al- und Cu-Legierungen aus dem schmelzflüssigen thixotropen oder festen Zustand in Großserien herzustellen und damit die Produktivität, Gestaltungsfreiheit und Wirtschaftlichkeit im Serieneinsatz deutlich zu erhöhen. Weiterhin lassen sich mit der beschriebenen Vorgehensweise andere gießtechnisch zu verarbeitende Materialien in eine wendelförmige Geometrie bringen.

Weiterhin lassen sich unterschiedliche Wendeln mit verschiedenen Windungszahlen, Windungsdicken und Windungsbreiten in einer Außenform herstellen, es wird eine Variantengestaltung ermöglicht. Mit der vorliegenden Erfindung wird ein wesentlicher Beitrag zur wirtschaftlichen Herstellung von Wendeln, z.B. für die Anwendung als Spule in elektrischen Maschinen geleistet und neue Fertigungsverfahren für E-Maschinen mit gegenüber dem Stand der Technik höherer Leistungsdichte und höherem Wirkungsgrad erschlossen. Durch Einsatz des innovativen Konzeptes zur Herstellung der Spulen oder Modellen für Spulen oder verloren Formen für Spulen geometrisch einfach geformten Werkzeugen werden robuste und automatisierbare Fertigungsprozesse für Großserien ermöglicht.

## Patentansprüche

1. Wälzgießverfahren zum Herstellen einer Spiralstruktur zur Verwendung in elektrischen Maschinen,
wobei Schmelze zwischen eine erste sowie eine dazu gegengleich laufende zweite Walze zugeführt wird, wobei
die erste Walze erste Zähne sowie die zweite Walze zweite Zähne hat und die ersten und/ oder zweiten Zähne Zahnflanken mit Kavitäten haben zur Aufnahme der zugeführten Schmelze, wobei
die Zähne derart gestaltet und ausgerichtet sind, dass beim Drehen der Walzen die Kavität mindestens eines Zahns zumindest zeitweise durch eine Oberfläche eines Zahns der anderen Walze begrenzt wird, so dass die zugeführte Schmelze zwischen den Zähnen unter Abkühlung zu einem Abschnitt der Spiralstruktur geformt wird.

2. Wälzgießverfahren nach Anspruch 1, **dadurch gekennzeichnet, dass** die Zuführung der Schmelze unter einer Schutzgasatmosphäre erfolgt.

3. Wälzgießverfahren nach Anspruch 1 oder 2, **dadurch gekennzeichnet, dass** die Menge der zugeführten Schmelze so dosiert ist, dass diese mit dem in der Kavität zur Verfügung gestellten Formhohlraum übereinstimmt oder etwas größer als dieser ist.

4. Wälzgießverfahren nach einem der vorhergehenden Ansprüche,
**dadurch gekennzeichnet, dass** das Material der Schmelze metallisch ist, aus Kunststoff oder aus einer Kombination von Metallen und Kunststoffen besteht.

5. Wälzgießverfahren nach dem vorhergehenden Anspruch, **dadurch gekennzeichnet, dass** das metallische Material Eisen, Aluminium, Kupfer bzw. Legierungen der vorgenannten Elemente enthält.

6. Wälzgießeinrichtung zum Herstellen einer Spiralstruktur zur Anwendung in elektrischen Maschinen, enthaltend
zumindest eine erste Walze mit ersten Zähnen sowie eine hierzu gegengleich laufende zweite Walze mit zweiten Zähnen, wobei
die ersten und/ oder zweiten Zähne Zahnflanken mit Kavitäten haben zur Aufnahme von zugeführter Schmelze, wobei die Zähne derart gestaltet und ausgerichtet sind, dass beim Drehen der Walzen die Kavität mindestens eines Zahns zumindest zeitweise durch eine Oberfläche eines Zahns der anderen Walze begrenzt wird zur Formung der zugeführten Schmelze zu einem Abschnitt der Spiralstruktur.

7. Wälzgießeinrichtung nach Anspruch 6, **dadurch gekennzeichnet, dass** diese ein den Walzen vorgelagertes Schmelzereservoir zur Bereitstellung von Schmelze aufweist.

8. Wälzgießeinrichtung nach Anspruch 6 oder 7, **dadurch gekennzeichnet, dass** den Walzen nachgelagert ein Wasserbad zum Abschrecken und/oder eine Flüssigkeitszuführung zur Zuführung von Flüssigkeit zum Passivieren, Isolieren oder Beschichten der Spiralstruktur vorgesehen ist.

9. Wälzgießverfahren nach einem der Ansprüche 1 bis 5, bei dem die formgebende Kontur in den Walzen durch Werkzeugeinsätze, vorteilhafterweise zur Gratvermeidung ein Einsatz pro herzustellendem Teil, dargestellt wird, um einen schnellen Wechsel bei Verschleiß, Beschädigung oder Konturwechsel zu ermöglichen.

10. Wälzgießverfahren nach Anspruch 9, bei dem die Einsätze für die Formgebende Kontur aus Stahl, Aluminium, metallischen Legierungen oder Keramiken sind.

11. Wälzgießverfahren nach Anspruch 9 oder 10 bei dem die Herstellung der konturgebenden Einsätze direkt von einer ebenen Werkzeugeinsatzkontur durch Umformen auf den Walzenradius hergestellt werden.

12. Wälzgießverfahren nach einem der Ansprüche 1 bis 5, enthaltend die Zuführung von Materialien im flüssigen, thixotropen oder festen Zustand, wobei bei Zuführung von Materialien im festen Zustand eine Vorwärmeinrichtung, beispielsweise durch Anlegen einer Spannung zwischen Wälzeinrichtung und Zuführeinrichtung, zur Einstellung der Materialtemperatur und Viskosität des zugeführten Materials, verwendet wird.

## Claims

1. Roller casting method for producing a spiral structure for use in electric machines,
wherein melt is supplied between a first roller and a second roller running in an opposite direction thereto, wherein
the first roller has first teeth, and the second roller has second teeth, and the first and/or second teeth have tooth flanks having voids for receiving the supplied melt, wherein
the teeth are designed and oriented such that, when the rollers are rotating, the void in at least one tooth is at least temporarily delimited by a surface of a tooth of the other roller such that the supplied melt is molded between the teeth as it cools to form a portion of the spiral structure.

2. Roller casting method according to claim 1, **characterized in that** the melt is supplied in an inert gas atmosphere.

3. Roller casting method according to claim 1 or 2, **characterized in that** the amount of the supplied melt is metered such that it matches the mold cavity available in the void or is slightly greater than the mold cavity.

4. Roller casting method according to any of the preceding claims, **characterized in that** the melt material is metal, consists of plastics material, or consists of a combination of metals and plastics materials.

5. Roller casting method according to the preceding claim, **characterized in that** the metal material contains iron, aluminum, copper, or alloys of the aforementioned elements.

6. Roller casting apparatus for producing a spiral structure for use in electric machines, containing
at least one first roller having first teeth and a second roller, running in an opposite direction thereto, having second teeth, wherein
the first and/or second teeth have tooth flanks having voids for receiving supplied melt, wherein the teeth are designed and oriented such that, when the rollers are rotating, the void in at least one tooth is at least temporarily delimited by a surface of a tooth of the other roller in order to mold the supplied melt to form a portion of the spiral structure.

7. Roller casting apparatus according to claim 6, **characterized in that** said apparatus comprises a melt reservoir upstream of the rollers for providing melt.

8. Roller casting apparatus according to claim 6 or 7, **characterized in that** a water bath for quenching and/or a liquid supply system for supplying liquid for passivating, insulating, or coating the spiral structure is provided downstream of the rollers.

9. Roller casting method according to any of claims 1 to 5, in which the molding contour in the rollers is provided by die inserts, advantageously for flash prevention, with one insert per part to be produced, in order to facilitate a quick change in the event of wear, damage, or a change in contour.

10. Roller casting method according to claim 9, in which the inserts for the molding contour are made of steel, aluminum, metal alloys, or ceramics.

11. Roller casting method according to claim 9 or 10, in which the contouring inserts are produced directly from a planar tool insert contour by shaping to the roller radius.

12. Roller casting method according to any of claims 1 to 5, containing the supply of materials in the liquid, thixotropic, or solid state, wherein, if materials are supplied in the solid state, a preheating apparatus is used, for example by applying a voltage between the roller apparatus and the supply apparatus, for setting the material temperature and viscosity of the supplied material.

## Revendications

1. Procédé de coulée-laminage permettant la fabrication d'une structure en spirale pour un emploi dans des machines électriques,
dans lequel du produit en fusion est alimenté entre un premier cylindre et un deuxième cylindre tournant en sens contraire par rapport à celui-ci, où
le premier cylindre possède des premières dents et le deuxième cylindre possède des deuxièmes dents, et les premières et/ou les deuxièmes dents ont des flancs de dents avec des cavités permettant la réception du produit en fusion alimenté, où
les dents sont conçues et orientées de telle manière que, lors de la rotation des cylindres, la cavité d'au moins une dent est délimitée au moins momentanément par une surface d'une dent de l'autre cylindre de sorte que le produit en fusion alimenté est moulé entre les dents sous refroidissement pour former un tronçon de la structure en spirale.

2. Procédé de coulée-laminage selon la revendication 1, **caractérisé en ce que** l'alimentation du produit en fusion a lieu sous une atmosphère d'un gaz de protection.

3. Procédé de coulée-laminage selon la revendication 1 ou la revendication 2, **caractérisé en ce que** la quantité de produit en fusion alimentée est dosée de telle manière que celle-ci corresponde à l'espace creux de moulage mis à disposition dans la cavité ou est légèrement plus grande que celui-ci.

4. Procédé de coulée-laminage selon l'une des revendications précédentes, **caractérisé en ce que** le matériau du produit en fusion est métallique, à base de matière plastique ou à base d'une combinaison de métaux et de matières plastiques.

5. Procédé de coulée-laminage selon l'une des revendications précédentes, **caractérisé en ce que** le matériau métallique contient du fer, de l'aluminium, du cuivre, respectivement des alliages des éléments cités précédemment.

6. Dispositif de coulée-laminage permettant la fabrication d'une structure en spirale pour un emploi dans des machines électriques, contenant
au moins un premier cylindre pourvu de premières dents ainsi qu'un deuxième cylindre pourvu de deuxièmes dents tournant en sens contraire par rapport à celui-ci, dans lequel
les premières et/ou les deuxièmes dents possèdent des flancs de dents pourvus de cavités permettant la réception du produit en fusion alimenté, où les dents sont conçues et orientées de telle manière que, lors de la rotation des cylindres, la cavité d'au moins une dent est délimitée au moins momentanément par une surface d'une dent de l'autre cylindre, permettant la transformation du produit en fusion alimenté en un tronçon de la structure en spirale.

7. Dispositif de coulée-laminage selon la revendication 6, **caractérisé en ce que** celui-ci présente un réservoir de produit en fusion disposé avant les cylindres pour la préparation du produit en fusion.

8. Dispositif de coulée-laminage selon la revendication 6 ou la revendication 7, **caractérisé en ce qu'**un bain d'eau est disposé après les cylindres afin d'effectuer une trempe, et/ou une alimentation en produit liquide est prévue pour une l'approvisionnement de produit liquide permettant une passivation, une isolation ou un revêtement de la structure en spirale.

9. Procédé de coulée-laminage selon l'une des revendications 1 à 5, chez lequel le contour donnant la forme dans les cylindres est donné par des pièces d'insertion d'outils, avantageusement, pour éviter des bavures, une pièce d'insertion par partie à fabriquer est réalisée afin de permettre un échange rapide lors d'une usure, d'un endommagement ou d'un changement de contour.

10. Procédé de coulée-laminage selon la revendication 9, chez lequel les pièces d'insertion pour le contour donnant la forme sont en acier, en aluminium, dans des alliages métalliques ou des céramiques.

11. Procédé de coulée-laminage selon la revendication 9 ou la revendication 10, chez lequel la fabrication des pièces d'insertion donnant le contour est réalisée directement à partir d'un contour de pièce d'insertion d'outil plan par un modelage par rapport au rayon du cylindre.

12. Procédé de coulée-laminage selon l'une des revendications 1 à 5, contenant l'approvisionnement de matériaux à l'état liquide, thixotrope ou solide, dans lequel, lors de l'approvisionnement de matériaux à l'état solide, on emploie un dispositif de préchauffage, par exemple, en appliquant une tension entre le dispositif de laminage et le dispositif d'approvisionnement, permettant le réglage de la température du matériau et de la viscosité du matériau alimenté.
